Europäisches Patentamt

European Patent Office

Office européen des brevets

(19)

(11) Publication number: **0 072 870**
**A1**

# EUROPEAN PATENT APPLICATION

published in accordance with Art. 158(3) EPC

(21) Application number: 82900658.4

(22) Date of filing: 24.02.82

Data of the International application taken as a basis:

(86) International application number:
PCT/JP82/00052

(87) International publication number:
WO82/02963 (02.09.82 82/21)

(51) Int. Cl.³: **G 05 D 3/20**

(30) Priority: 24.02.81 JP 25910/81

(43) Date of publication of application:
02.03.83 Bulletin 83/9

(84) Designated Contracting States:
CH DE FR GB LI

(71) Applicant: FANUC LIMITED
5-1, Asahigaoka, 3-chome
Hino-shi Tokyo 191(JP)

(72) Inventor: SAKANO, Tetsurou
Cohpo-Juraku 201 1-4-1, Kamirenjaku
Mitaka-shi Tokyo 181(JP)

(74) Representative: Billington, Lawrence Emlyn et al,
HASELTINE LAKE & CO Hazlitt House 28 Southampton
Buildings Chancery Lane
London WC2A 1AT(GB)

(54) BACKLASH COMPENSATION SYSTEM FOR DUAL POSITION-FEEDBACK CONTROL SYSTEMS.

(57) Machine tool with a movable mechanism (TBL) driven by a servomotor (MT). There are provided first and second position-control systems in the respective one of which a first position sensor (RSV) and a second position sensor (IND) are fed back, respectively. The polarity of the difference between the second sensor signal ($FP_2$) and a command signal (CP) is discriminated, and in response to changes in the polarity, a backlash compensation circuit (BCP) supplies a correction value corresponding to the amount of backlash of the movable mechanism (TBL), to the input terminal of the first position-control system as the next stage to compensate for the backlash.

./...

EP 0 072 870 A1

Fig. 1

0072870

TITLE MODIFIED
see front page

DESCRIPTION

SYSTEM FOR CORRECTING A BACKLASH

IN A DUAL-POSITION FEEDBACK CONTROL SYSTEM

## TECHNICAL FIELD

The present invention relates to a backlash correcting system, and more particularly to a system for correcting a backlash in a dual-position feedback control system in a short period of time.

## BACKGROUND ART

Mechanical drive transmission systems of machine tools generally have backlashes. Closed-loop servo systems enable a mechanical movable unit such as a table to be located in a target position with high precision without taking backlashes into account.

When the mechanical movable unit of a machine tool having a backlash moves in a reverse direction, such a backlash is cancelled and hence the mechanical movable unit fails to move toward the the target position. The direction of movement of the mechanical movable unit changes several times before the machining of a workpiece is completed. While the mechanical movable unit changes its direction of movement, the direction of movement thereof along a certain axis may vary although the direction of movement along another axis may not. Under such a condition, the table immediately moves along the another axis, but moves along the certain axis a predetermined period of time after the backlash has been cancelled out.  Therefore, the workpiece cannot be machined with precision; an out-of-roundness may for example be increased when the direction of movement is reversed.

## DISCLOSURE OF THE INVENTION

It is an object of the present invention to provide a system for correcting a backlash in a dual-position feedback control system by cancelling out the backlash within a reduced period of time to prevent the backlash from influencing the machining accuracy and positioning accuracy.

More specifically, there is provided a system for correcting a backlash in a servo motor drive control system having a dual-position control system including a first position control system in which an output from a first position detector mounted on the shaft of a servo motor for driving a mechanical movable unit of a machine tool is fed back, and a second position control system in which an output from a second positional detector mounted on the mechanical movable unit is fed back, characterized in that either a command signal or a detection signal generated by the second position detector, or an error signal indicative of the difference between the command signal and the detection signal is used to determine reversal of the direction of movement, and an amount of correction corresponding to a backlash in the mechanical movable unit is added to the command signal for the first position control system to increase a voltage applied to the servo motor, whereby the servo motor can be started rapidly to correct the backlash in the mechanical movable unit in a short period of time.

## BRIEF DESCRIPTION OF THE DRAWINGS

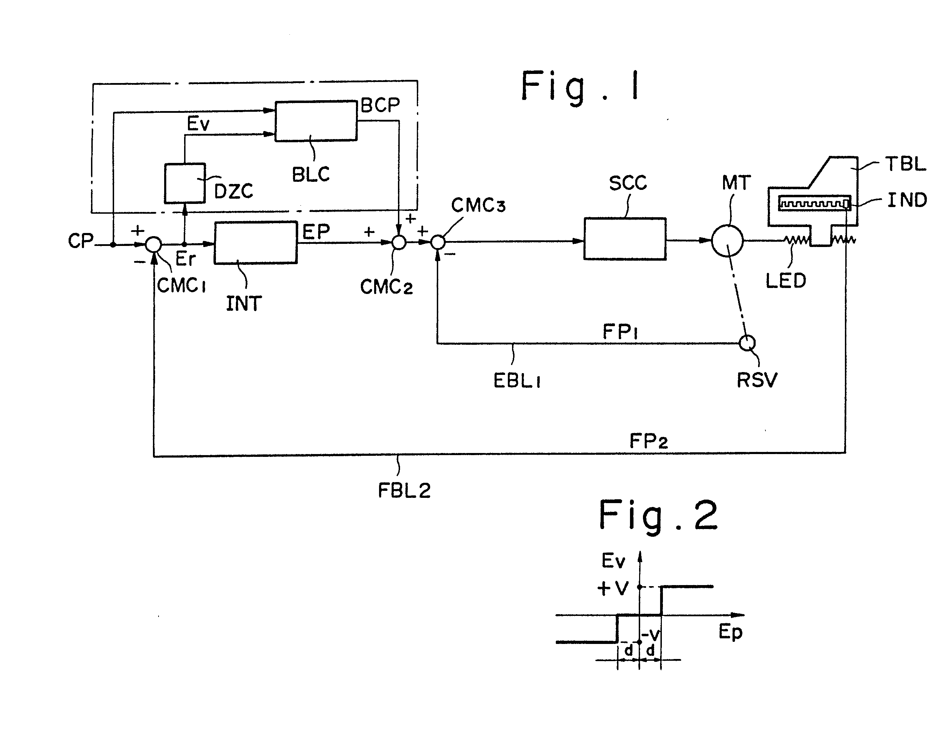

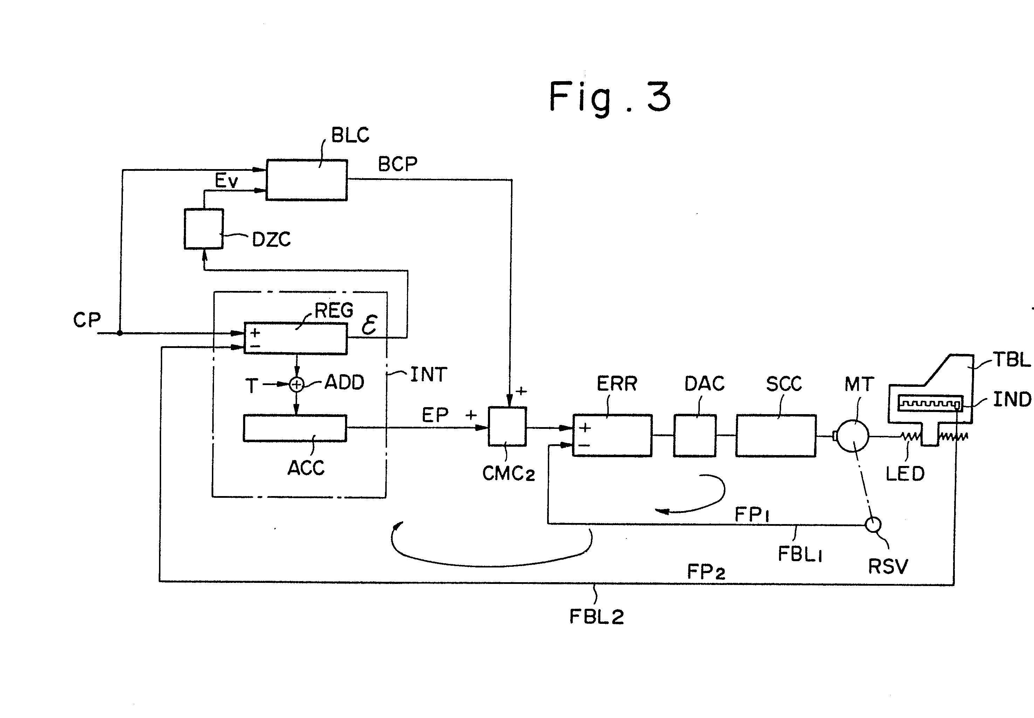

Fig. 1 is a block diagram of an embodiment according to the present invention; Fig. 2 is a diagram explanatory of a nonsensitive zone; and Fig. 3 is a block diagram of another embodiment of the present invention.

## BEST MODE FOR CARRYING OUT THE INVENTION

For a fuller understanding of the present invention, embodiments thereof will now be described in greater detail with reference to the drawings.

Fig. 1 is a block diagram of an embodiment of the present invention.

Designated at MT is a d.c. motor (hereinafter referred to as a "motor"), LED a lead screw drivable by the motor MT, TBL a table for placing a workpiece thereon, RSV a first position detector such as a resolver mounted on the shaft of the motor MT for generating a feedback pulse $FP_1$ each time the motor rotates thourgh a predetermined angle, IND a second position detector such as an Inductosyn mounted on the table TBL for generating a feedback pulse $FP_2$ each time the table moves a predetermined interval, $CMC_1$ a first adder circuit for combining a command pulse CP generated by a pulse distributor (not shown) and the

feedback pulse $FP_2$, INT an integrating element, $CMC_2$ a second adder circuit for combining a backlash correction pulse BCP (described later) and a pulse EP produced by the integrating element INT, $CMC_3$ a third adder circuit for combining a pulse issued from the second adder circuit $CMC_2$ and the feedback pulse $FP_1$ generated by the first position detector RSV, and SCC a known speed control circuit. The above components except the second adder circuit constitute a known dual-position feedback control system having two position feedback loops. More specifically, a first position feedback system is composed of a feedback line $FBL_1$, and a second position feedback system is composed of a feedback line $FBL_2$.

A backlash correction circuit BLC produces a number of backlash correction pulses BCP which corresponds to an amount of backlash when the sign of the command pulse CP changes (or the sign of the feedback pulse $FP_1$ changes), or when an error Er indicative of the difference between the command pulse CP and the position pulse $FP_2$ exceeds a predetermined value and the sign of the error changes. Therefore, the backlash correction circuit BLC has a function of determining direction reversal and a function of generating a predetermined number of correction pulses, though not shown. A nonsensitive zone setting unit DZC generates + v when the difference (called a "positional error") Ep between the number of command pulses and the number of position pulses is greater than a constant value + d, and produces - v when the difference Ep is smaller than a constant value - d (See Fig. 2).

Operation of such a dual-position control system is as follows:  The second position feedback loop performs positional control such that the positional error EP representative of the difference between the number of command pulses and the number of feedback pulses generated from the second position detector IND will be zeroed.  The first position feedback loop effects positional control such that the difference between the number of pulses EP produced on the basis of the positional error Er and the number of feedback pulses generated from the first position detector RSV will be zeroed.  The first and second position feedback loops serve as a whole to position the table TBL into a commanded location or to move the table TBL along a commanded path.

When the commanded direction changes, that is, the sign of the commanded pulse CP changes, the backlash correction circuit BLC detects such a change in the direction immediately to generate a number of correction pusles BCL which corresponds to the amount of backlash.  As a consequence, an input to the first position feedback system is increased, or stated otherwise, the number of pulses applied to the third adder circuit $CMC_3$ is increased, whereupon an input to the motor MT is increased to start the motor quickly for thereby correcting in a short period of time a backlash in a mechanical drive transmission system between the motor MT and the second position detector IND. Briefly summarized, when the direction is reversed, the voltage imposed on the motor MT is increased to thereby start the motor MT quickly, whereupon the backlash can rapidly be removed and the table TBL can start moving in the commanded direction.

When the table TBL is moved under an external force in a direction opposite to the direction in which the table has travelled, and the interval of such movement exceeds a certain value d, the backlash correction circuit BLC detects such movement by monitoring the output from the nonsensitive zone setting unit DZC, and generates a number of correction pulses BCP which is indicative of the amount of backlash. The subsequent process is similar to the foregoing correction process to cope with a change in the commanded direciton in that the voltage applied to the motor MT is increased to correct the backlash speedily, and thereafter the table TBL is brought back to the position which the table assumed prior to application of the external force. The nonsensitive zone $\pm$ d is inserted for the reason that if d were nil or extremely small, then the second position feedback system would suffer from hunting, thus failing to stop the table stably in the target position.

Fig. 3 is a block diagram of another embodiment of the present invention. Identical parts shown in Fig. 3 are denoted by identical reference characters in Fig. 1, and no detailed description thereof will be given.

An integrating element INT is in the form of a digital intagrating circuit composed of an error register REG for storing command pulses CP and counting down its own content each time a second feedback pulse $FBL_2$ is issued, an accumulator ACC, and an adder ADD. The adder ADD serves to add the content of the error register REG and the content of the accumulator ACC at a constant period T, and set the sum in the accumulator ACC. In response to such addition, the accumulator ACC generates an overflow pulse EP as an output. Let the speed of the pulses CP be Fi and the speed of the pulses $FBL_2$ be Ff, and the content of the register REG or the positional error $\epsilon$ with Fi being constant can be expressed by:

$$\epsilon = \frac{1}{kT}(Fi - Ff) [1 - \exp (-kt)]$$

and the pulse frequency f of the overflow pulses EP can be given as follows:

$$f = (Fi - Ff) [1 - \exp (-kt)]$$

An error register ERR stores output pulses from a second adder circuit $CMC_2$ and counts down its own content each time a feedback pulse $FBL_1$ is generated. A digital-to-analog converter DAC produces an analog output voltage proportional to the content of the error register ERR.

The dual-position control system illustrated in Fig. 3 is substantially the same as that of Fig. 1 except that the integrating element is more specifically defined and first and third adder circuits comprise error registers. The dual-position control system of Fig. 3 will operate in the same manner for positional control and backlash correction.

## INDUSTRIAL APPLICABILITY

According to the present invention, when the direction of movement of the table is reversed, the voltage applied to the table is increased to cancel out a backlash in a reduced period of time so that the machining accuracy will not be affected by the backlash and the time required for machining the workpiece can be shortened. Where the backlash correction system of the invention is used for driving a precision machine such as a machine tool or the like in which the motor is required to rotate in one and opposite directions repeatedly, the accuracy with which the workpiece is finished can be increased.

CLAIMS:

1. A system for correcting a backlash in a dual-position control system including a first minor position feedback control system in which a detection signal from a first position detector mounted on the shaft of a servo motor is fed back, and a second major position feedback control system in which a detection signal from a second positional detector mounted on a mechanical movable unit is fed back, for thereby performing positional control of the mechanical movable unit, characterized in that either a command signal or the detection signal generated by said second position detector, or an error signal indicative of the difference between the command signal and the detection signal is used to determine reversal of the direction of movement, and an amount of correction corresponding to a backlash is added to an input to a positional control system employing said first position detector.

2. A system according to claim 1, wherein said second major position feedback control system includes a digital integrating circuit composed of an error register, an accumulator, and an adder.

# Fig. 1

# Fig. 2

# Fig.3

0072870

0072870

## I. CLASSIFICATION OF SUBJECT MATTER (if several classification symbols apply, indicate all) ³

According to International Patent Classification (IPC) or to both National Classification and IPC

Int. Cl.³ G05D 3/20

## II. FIELDS SEARCHED

| Minimum Documentation Searched ⁴ | |
|---|---|
| Classification System | Classification Symbols |
| IPC | G05D 3/00, G05B 19/00 |

Documentation Searched other than Minimum Documentation
to the Extent that such Documents are Included in the Fields Searched ⁵

| | |
|---|---|
| Jitsuyo Shinan Koho | 1965-1982 |
| Kokai Jitsuyo Shinan Koho | 1971-1982 |

## III. DOCUMENTS CONSIDERED TO BE RELEVANT ¹⁴

| Category * | Citation of Document, ¹⁶ with indication, where appropriate, of the relevant passages ¹⁷ | Relevant to Claim No. ¹⁸ |
|---|---|---|
| Y | JP, B2, 52-2074 (Fujitsu Fanuc Limited) 19.January.1977 (19.1.77) | 1, 2 |
| Y | JP, B2, 53-37509 (Fujitsu Fanuc Limited) 9.October.1978 (9.10.78) | 1, 2 |

* Special categories of cited documents: ¹⁵

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search ³ | Date of Mailing of this International Search Report ² |
|---|---|
| May 24, 1982 (24.5.82) | June 7, 1982 (07.06.82) |
| International Searching Authority ¹ | Signature of Authorized Officer ²⁰ |
| Japanese Patent Office | |

Form PCT/ISA/210 (second sheet) (October 1977)